# EUROPÄISCHE PATENTSCHRIFT

(11) **EP 2 347 853 B1**
(45) Veröffentlichungstag und Bekanntmachung des Hinweises auf die Patenterteilung: **05.12.2012**
(21) Anmeldenummer: 11000200.3
(22) Anmeldetag: 12.01.2011
(51) Int. Cl.: B23P 19/00, B23P 19/06, B21J 15/32

(54) **Führungs- und Setzeinrichtung für Befestigungselemente**
Guide and setting device for fixing elements
Dispositif de guidage et de fixation pour éléments de fixation

(30) Priorität: 22.01.2010 DE 102010005404
(43) Veröffentlichungstag der Anmeldung: 27.07.2011
(73) Patentinhaber: Profil Verbindungstechnik GmbH & Co. KG, 61381 Friedrichsdorf (DE)
(72) Erfinder: Vieth, Michael, 61118 Bad Vilbel (DE)
(74) Vertreter: Manitz, Finsterwald & Partner GbR

(56) Entgegenhaltungen:
- EP-A1- 0 755 749
- EP-A1- 1 382 418
- EP-A2- 0 922 538
- DE-A1- 3 937 903
- US-A- 3 967 664
- US-A1- 2003 164 381

## Beschreibung

Die vorliegende Erfindung betrifft eine Führungs- und Setzeinrichtung für Elemente, insbesondere Fügeelemente, bestehend aus einem hohlen Führungsstück, einem innerhalb des Führungsstücks axial verschiebbar angeordneten Stempel und senkrecht zum Stempel verschiebbar geführten und in Richtung auf die Längsachse des Stempels bzw. des Führungsstückes zu vorgespannten Haltegliedern, wobei in einer zurückgezogenen Beladeposition des Stempels jeweils ein Element durch einen Zuführkanal zwischen den Haltegliedern und dem freien Stirnende des Stempels einführbar ist, sowie ein Verfahren zum Betrieb einer Führungs- und Setzeinrichtung. Eine Führungs- und Setzvorrichtung nach dem Oberbegriff des Anspruchs 1 und ein Verfahren zum Anbringen eines Elements an einen Blechteil nach dem Oberbegriff des Anspruchs 13 sind aus der EP 0922538 A1 bekannt.

Eine Führungs- und Setzeinrichtung dieser Art ist aus der EP 0755749B4 bekannt. Sie wird erfolgreich für relativ flache kreisrunde Nietelemente verwendet, insbesondere solche mit einer balligen Form, und hat den besonderen Vorteil, dass die Elemente bis zur Anbringung an ein Blechteil sauber geführt sind. Eine Führungs- und Setzeinrichtung der bekannten Art ist jedoch nicht unbedingt geeignet für die Führung und das Setzen von länglichen Elementen, insbesondere nicht für Elemente, die jeweils einen Kopfteil größerer Querabmessung und einen Schaftteil kleinerer Querabmessung sowie vorzugsweise einen mit dem Schafteil eine Schulter bildenden Nietabschnitt aufweisen, die eine Blechanlagefläche bildet.

Aufgabe der vorliegenden Erfindung ist, eine Führungs- und Setzeinrichtung der eingangs genannten Art weiterzubilden, damit sie längliche Elemente mit einem Kopfteil größerer Querabmessung und einem Schaftteil kleinerer Querabmessung sowie vorzugsweise einem mit dem Schafteil eine Schulter bildenden Nietabschnitt, die eine Blechanlagefläche bildet, zuverlässig führen und setzen kann, wobei die Einrichtung preisgünstig herstellbar ist und zuverlässig über längere Zeiträume automatisch mit hohen Stückzahlen an entsprechenden Elementen arbeiten soll.

Erfindungsgemäß wird diese Aufgabe durch eine Führungs- und Setzeinrichtung bzw. ein Verfahren mit den im Anspruch 1 bzw. 13 genannten Merkmalen gelöst. Vorteilhafte Varianten und Ausgestaltungen sind Gegenstand von Unteransprüchen.

Zur Lösung dieser Aufgabe wird eine Einrichtung der eingangs genannten Art vorgesehen, die sich dadurch auszeichnet, dass die Halteglieder aufgrund der axialen Vorschubbewegung des Stempels aufsteuerbar sind und das jeweilige Element in axialer Richtung an den Haltegliedern vorbei bewegbar ist, dass weitere den erst genannten Halteglieder folgende Halteglieder vorgesehen sind, die das Element während eines Setzhubes halten, und dass Verriegelungselemente vorgesehen sind, die während des Setzhubes ein Aufsteuern der weiteren Halteglieder verhindern, jedoch nach dem Vollenden des Setzhubes das Aufsteuern der weiteren Halteglieder zur Freigabe des Elements zulassen.

Eine Führungs- und Setzeinrichtung dieser Art kann sehr kompakt gebaut werden, da die ersten und zweiten Halteglieder platzsparend unmittelbar unter einander angeordnet und auch relativ flach ausgebildet werden können. Ferner und besonders wichtig ist, dass die weiteren Halteglieder, die im verriegelten Zustand mittels der Verriegelungselemente unverschiebbar und positionsgerecht angeordnet, das jeweilige Element so halten, dass dieses nicht nur positionsgerecht gehalten, sondern auch stets sauber geführt und kippfrei gehalten wird. Dies ist beispielsweise bei der Positionierung des Schaftteils oder des Nietabschnitts in ein vorbereitetes Loch oder bei dem Durchstanzen eines Bauteils wichtig, was grundsätzlich bei der Anwendung der Führungs- und Setzeinrichtung möglich ist, d.h. diese kann auch als Stanzkopf verwendet werden.

Die Führungs- und Setzeinrichtung ist vorzugsweise so ausgelegt, dass die ersten Halteglieder an ihren einander zugewandten Stirnseiten eine Formgebung aufweisen, die einander in Richtung der Längsachse folgend wenigstens einen ersten Abschnitt aufweisen, der mindestens einen dem Schaftteil zugewandten Bereich des Kopfteils aufnimmt und zu einem zweiten Abschnitt verjüngt, der an die Querabmessung des Schaftteils angepasst ist, wobei die Schrägflächen des ersten Abschnitts ausgelegt sind, um das Aufsteuern der ersten Halteglieder durch den Kopfteil unter der Einwirkung des Stempels bei dessen Vorschubbewegung herbeizuführen.

Im Gegensatz zu der bekannten Anordnung gemäß der EP 0755749 B4 werden die Halteglieder durch den Druck des Kopfteils des Elements anstatt durch das Stirnende des Stempels aufgesteuert, was allerdings auch erfindungsgemäß möglich wäre. Ferner werden hier die Elemente durch den Führungskanal fallend oder mit einem Druckluftstoß oder anderweitig axial zwischen den bereits geschlossenen ersten Haltegliedern eingeführt anstatt von der Seite zwischen den Halteglieder eingeschoben, was allerdings auch denkbar wäre, aber die Bauhöhe der Einrichtung je nach Länge des Schaftteils vergrößert. Da der Schaftteil des Elements zwischen den weiteren Haltegliedern geschoben werden kann, noch bevor der Kopfteil des Elements die ersten Halteglieder verlässt, wird eine saubere Führung des Elements stets gewährleistet, wobei die weiteren Halteglieder, die bisher aufgrund der Vorspannung weg von der Längsachse des Stempels zunächst geöffnet waren, bei oder kurz vor der Übergabe der Verriegelungselemente, die vorzugsweise synchron mit dem Stempel bewegt werden, nach innen geschoben und verriegelt werden.

Die weiteren Halteglieder weisen vorzugsweise an ihren einander zugewandten Stirnseiten eine Formgebung auf, die einander in Richtung der Längsachse folgend wenigstens einen ersten Abschnitt aufweisen, der mindestens einen dem Schaftteil zugewandten Bereich des Kopfteils aufnimmt, einen zweiten sich vom ersten Abschnitt auf die Querabmessung des Schaftteils verjüngenden Abschnitt, dessen Schrägflächen ausgelegt sind, um das Aufsteuern der weiteren Halteglieder durch den Kopfteil bei oder nach dem Zurückziehen der Verriegelungselemente zu ermöglichen und das jeweilige Element hierdurch freizugeben, und einen dritten Abschnitt, der an den Schaftteil angreift, um das Element während des Setzvorgangs gegebenenfalls in Zusammenarbeit mit dem ersten Abschnitt kippfrei zu halten.

Diese Formgebung stellt nicht nur die genaue Positionierung und kippfreie Halterung des Elements während des Setzens sicher, sondern ermöglicht darüber hinaus, dass nach der Entfernung der Verriegelungs- bzw. Sperrelemente, beispielsweise bei der anfänglichen Bewegung bei der Öffnung der Presse, in der die Führungs- und Setzeinrichtung eingebaut ist, dass der Kopfteil des Elements nach dem erfolgten Setzvorgang und bei der anschließenden Öffnung der Presse die weiteren Halteglieder aufgesteuert werden und hierdurch das Element freigeben. Dies erfolgt dann so, dass das Element nicht aus dem Bauteil oder Blechteil, an dem es nun befestigt ist, herausgerissen wird. Hierfür muss das Bauteil oder Blechteil anderweitig gehalten werden, beispielsweise durch einen gefederten Niederhalter, der das Bauteil oder das Blechteil von der Führungs- und Setzeinrichtung weg verspannt oder das Bauteil oder das Blechteil oder den Nietabschnitt des Elements (falls ein solcher vorhanden ist) hält.

Die erstgenannten Halteglieder, die vorzugsweise durch zwei einander gegenüberliegende Halteglieder gebildet sind, sind bevorzugt mittels Feder aufeinander zu vorgespannt. Im gleichen Sinne sind die weiteren Halteglieder, die auch vorzugsweise durch zwei einander gegenüberliegende Halteglieder gebildet sind, mittels Feder voneinander weg vorgespannt.

Dies stellt besonders einfache, kompakte und kostengünstige Lösungen dar, obwohl die Anwendung einer anderen Zahl an ersten Haltegliedern und/oder weitere Halteglieder, beispielsweise jeweils drei oder vier Halteglieder, denkbar wäre.

Die Führungs- und Setzeinrichtung besteht vorzugsweise aus einem Befestigungsteil, der zur Anbringung an ein Werkzeug einer Presse ausgelegt ist, sowie aus dem hohlen Führungsstück, das über vom Befestigungsteil getragenen, von diesem weg vorspannbaren und in Richtung auf diesen zu bewegbaren Führungen am Befestigungsteil beweglich angebracht ist, wobei der Stempel ebenfalls am Befestigungsteil angebracht ist.

Eine solche Auslegung harmoniert gut mit der Arbeit einer Presse, in der die Führungs- und Setzeinrichtung benutzt wird, insbesondere mit deren Schließ- und Öffnungshuben und zudem recht zuverlässig arbeitet.

Dabei ist der Stempel vorzugsweise für eine begrenzte Bewegung in Richtung der Längsachse gegenüber dem Befestigungsteil an diesem angebracht, wobei die Amplitude der vorgesehenen Bewegung des Führungsstücks gegenüber dem Befestigungsteil größer ist als die Amplitude der vorgesehenen begrenzten Bewegung des Stempels gegenüber dem Befestigungsteil, und dass eine Einrichtung vorgesehen ist, um zu ermitteln, ob der Stempel sich in einer vorgespannten Stellung oder einer zurückgedrängten Stellung befindet.

Diese Anordnung, die durch eine verschiebbare Anbringung des Stempels am Befestigungsteil einfach zu realisieren ist, macht eine zuverlässige Prüfung möglich, ob bei einem sogenannten Kontrollhub der Führungs-und Setzeinrichtung ein Element zwischen den ersten Haltegliedern vorhanden ist. Sollte dies nicht der Fall sein, so kann der weitere Betrieb der Presse durch das Fehlen eines entsprechenden Signals rechtzeitig unterbrochen werden. Ermittelt wird beispielsweise mittels eines Näherungssensors oder eines End- bzw. Mikroschalters oder eines anderen Initiators, ob die Amplitude der vorgesehenen begrenzten Bewegung des Stempels gegenüber dem Befestigungsteil erreicht wird.

Besonders bevorzugt ist eine Führungs- und Setzeinrichtung, bei der die Führungen an jeweiligen Kolben befestigt sind, die in jeweiligen Zylindern des Befestigungsteils gleiten können und bei der die Kolben bzw. die Zylinderräume auf der dem hohlen Führungsstück abgewandten Seite durch Fluiddruck beaufschlagbar sind, um das hohle Führungsstück vom Befestigungsteil weg vorzuspannen.

Ferner ist es günstig, wenn die Kolben bzw. die Zylinderräume auf der dem hohlen Führungsstück zugewandten Seite mit einem Steuerdruck beaufschlagbar sind. Der Steuerdruck kann z.B. für den oben erwähnten Kontrollhub genutzt werden. Durch die kurzfristige Anbringung des Steuerdrucks kann das Führungsstück entgegen einem etwaigen Druck in die Kammern auf den dem Führungsstück abgewandten Seiten der Kolben bei jedem Arbeitszyklus nach der Einführung eines neuen Elements in Richtung auf den Befestigungsteil zu bewegt werden, so dass der Stempel das Element berührt und das entsprechende Signal des Näherungssensors auslöst. Sollte ein Element doch nicht in den ersten Haltefingern vorliegen, so bleibt das erwartete Signal aus und der weitere Betrieb der Presse wird unterbunden. Denkbar wäre es auch, das Schließen der Presse für diese Funktion anstelle eines Steuerdrucks zu verwenden, da auch beim Schließen der Presse sich das Führungsstück auf den Befestigungsteil zu bewegt und den Stempel gegenüber dem Sensor bewegt, sofern ein Element vorhanden ist.

Die Verriegelungselemente sind vorzugsweise durch Schieber ausgebildet, die durch Bewegung des Führungsstücks auf den Befestigungsteil zu - was durch das Schließen der Presse bewirkt wird - synchron zu der Bewegung des Stempels sich hinter den weiteren Haltegliedern bewegen und diese entgegen der Federvorspannung aufeinander zu bewegen und verriegeln. Bei der Öffnung der Presse werden dann, um zu verhindern, dass die verriegelten Halteglieder das Element oder das Bauteil bzw. Blechteil beschädigen, die Verriegelungselemente aus dem Bereich der weiteren Halteglieder herausgezogen, wodurch sich die weiteren Halteglieder wieder auseinander bewegen können, einerseits aufgrund der Federvorspannung und andererseits durch die Bewegung des Kopfteils entlang dessen Schrägflächen.

Bevorzugt ist eine Führungs- und Setzeinrichtung, bei der die Schieber sich parallel zur Längsachse erstrecken und am Befestigungsteil angebracht sind. An ihren den weiteren Haltegliedern jeweils zugewandten Enden weisen die Schieber vorzugsweise eine jeweilige Schräge auf, die mit entsprechenden Schrägflächen der weiteren Halteglieder zusammenarbeiten, um diese aufeinander zu zu bewegen und in Eingriff mit dem jeweiligen Element zu bringen. Dies stellt eine besonders ausgeklügelte Auslegung dar, die sehr zuverlässig arbeitet.

Die Schieber weisen vorzugsweise auf ihren den genannten Schrägen gegenüberliegenden Seiten eine jeweilige Abstützfläche auf, die in der Verriegelungsstellung an einer feststehenden Fläche des hohlen Führungsstücks anliegt. Hierdurch sind die länglichen Schieber so abgestützt, dass sie keine ausgeprägte Biegemomente ausgesetzt sind, wodurch sie schmal und kompakt ausgebildet sein können.

Das erfindungsgemäße Verfahren zum Abringen eines Elements an einen Blechteil mittels einer Führungs- und Setzeinrichtung weist folgende Merkmale auf:
a) die jeweils einen Kopfteil größerer Querabmessung und einen Schaftteil kleinerer Querabmessung aufweisenden Elemente, insbesondere Fügeelemente, werden vereinzelt in ein hohles Führungsstück eingeführt und von ersten aufeinander zu vorgespannten Haltegliedern im Bereich des Kopfteils mit ihrem Schaftteil voran aufgenommen,
b) anschließend wird das jeweilige Element von einem innerhalb des Führungsstücks axial verschiebbar angeordneten Stempel durch die ersten Halteglieder hindurchgedrückt, und zwar während einer hierdurch bewirkten Aufsteuerbewegung der ersten Halteglieder senkrecht zur Längsachse des Stempels,
c) das jeweilige Element wird dann in einer von weiteren Haltegliedern gebildeten Aufnahme aufgenommen, die das Element während des Setzhubes halten,
d) Verriegelungselemente werden verwendet, um während des Setzhubes ein Aufsteuern der weiteren Halteglieder zu verhindern und
e) nach dem Vollenden des Setzhubes werden die Verriegelungselemente gelöst, um das Aufsteuern der weiteren Halteglieder zur Freigabe des Elements zuzulassen.

Dieses Verfahren stellt sicher, das das jeweilige Element stets einwandfrei geführt und gegen unerwünschtes Kippen bis zur Vollendung des Setzhubes gehalten wird, d.h. beispielsweise der Vernietung des Elements mit einem Blechteil oder anderweitiger Befestigung des Elements, wonach ein Kippen oder eine Fehlpositionierung nicht mehr eintreten kann. Ferner stellt das Verfahren sicher, dass die Führungs- und Setzeinrichtung am Ende des Setzhubes zuverlässig von dem Element gelöst werden kann.

Der Stempel ist, wie oben erwähnt, vorzugsweise gegenüber einem feststehenden Teil der Führungs- und Setzeinrichtung begrenzt beweglich angeordnet, wodurch das Verfahren den weiteren Schritt der Überprüfung des Vorhandenseins eines Elements beinhaltet, und zwar dadurch, dass festgestellt wird, ob bei Heranfahren des Stempels an das von den ersten Haltegliedern gehaltene Element die Berührung des Stempels mit dem Element zu einer begrenzten Ausweichbewegung des Stempels gegenüber dem feststehenden Teil führt, die detektiert wird.

Hierdurch können Fehlabläufe verhindert werden, wenn aus irgendeinem Grund kein Element vorhanden ist.

Schließlich ist es besonders günstig, wenn die Führungs- und Setzeinrichtung an einem Werkzeug einer Presse angebracht wird, und dass die aufgeführten Schritte a) bis e) durch das Schließen und anschließendes Öffnen der Presse ausgeführt bzw. bewerkstelligt werden.

Die Erfindung wird nachfolgend anhand von Ausführungsbeispielen und den beigefügten Zeichnungen näher erläutert, in denen zeigen:
- Fig. 1A: eine perspektivische Darstellung einer möglichen Ausbildung eines Elements, das mittels der erfindungsgemäßen Führungs- und Setzeinrichtung geführt und gesetzt werden kann,
- Fig. 1B: eine Seitenansicht des Elements gemäß Fig. 1A, das teilweise im Schnitt gezeigt ist,
- Fig. 1C: eine Stirnansicht des Elements der Fig. 1A in Pfeilrichtung C gesehen,
- Fig. 1D: eine Darstellung des Elements gemäß Fig. 1A nach der Anbringung an ein Blechteil,
- Fig. 2: eine Schnittzeichnung einer erfindungsgemäßen Führungsund Setzeinrichtung im Längsschnitt gesehen kurz vor der Einführung eines Elements in die durch zwei erste Halteglieder gebildete Aufnahme,
- Fig. 3: eine Schnittzeichnung entsprechend der Fig. 2, jedoch unmittelbar nach der Einführung eines Elements in die durch zwei erste Halteglieder gebildete Aufnahme,
- Fig. 4: eine Schnittzeichnung in einer Schnittebene durch die Längsachse der Fig. 2 bzw. Fig. 3 senkrecht zur Zeichnungsebene der Fig. 2 bzw. der Fig. 3, jedoch nach dem Einsetzen des Nietabschnitts des Elements in ein Blechteil, d.h. am Ende des Setzhubes,
- Fig. 5: eine Schnittzeichnung entsprechend der Fig. 4, jedoch nach dem Öffnen der Presse und dem Auseinanderfahren des Führungsstücks und des Befestigungsteils der erfindungsgemäßen Führungs- und Setzeinrichtung,
- Fig. 6: eine perspektivische Darstellung eines der ersten Halteglieder und
- Fig. 7: eine perspektivische Darstellung eines der weiteren Halteglieder

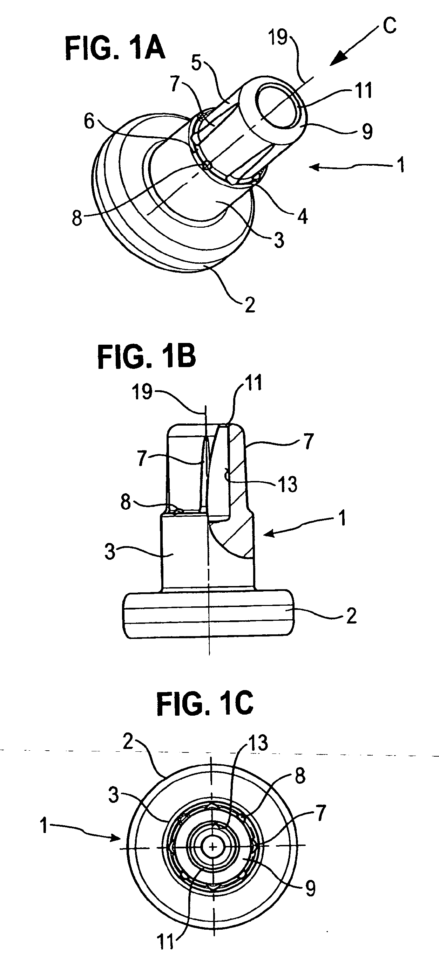

Es wird zunächst auf die Fig. 1A bis 1D verwiesen. Dort wird ein Beispiel für ein Funktionselement hier in Form eines Nietelements 1 gezeigt, das mittels der erfindungsgemäßen Führungs- und Setzeinrichtung in ein Blechteil gesetzt werden kann. Das gezeigte Element 1 hat einen Kopfteil 2 mit größerer Querabmessung und einen Schaftteil 3 mit kleinerer Querabmessung sowie einen mit dem Schaftteil 3 eine Schulter 4 bildenden Nietabschnitt 5, die eine Blechanlagefläche 6 bildet.

Am Nietabschnitt 5 sind mehrere längliche Verdrehsicherungsrippen 7 vorgesehen, die sich über die Gesamtlänge des zylindrischen Teils des Nietabschnitts erstrecken, sowie Verdrehsicherungsnoppen 8, die im Bereich der Blechanlagefläche 4 ausgebildet sind. Das freie Stirnende des Nietabschnitts 8 hat eine gerundete Außenfläche 9 und eine konusförmige innere Schneidfläche 11 sowie eine hohlzylindrische Passage 13, die am besten aus der Fig. 1B zu sehen ist.

Verdrehsicherungsmöglichkeiten wie die länglichen Rippen 7 und die Noppen bzw. Nasen 8 sind in der deutschen Patentanmeldung 102006062073.9 beschrieben und beansprucht.

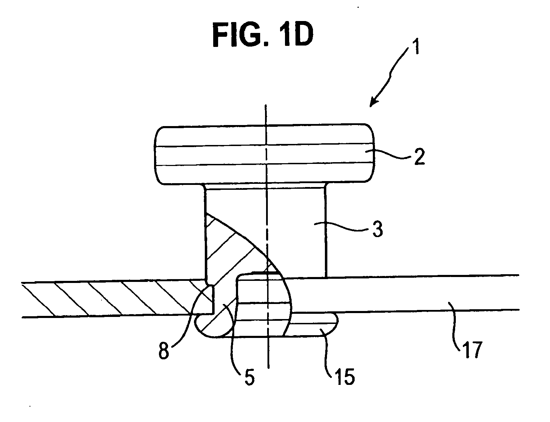

Die Ausbildung des freien Stirnendes des Elements mit der gerundeten Fläche 9 und der konusförmigen Schneidfläche 11 bedeutet, dass das gezeigte Element auch selbststanzend ausgeführt werden kann, d.h. bei Anbringung an einem Blechteil 17 im Stande ist, im Zusammenhang mit einer entsprechenden Matrize einen Stanzbutzen aus dem Blechteil herauszustanzen, wodurch der Nietabschnitt anschließend zu einem Nietbördel 15, das aus der Fig. 1D ersichtlich ist, gebildet wird. Das Element kann aber auch in einem vorgelochten Blechteil eingesetzt werden - wie in Fig. 1D bezeigt, d.h. es ist nicht zwingend notwendig, die selbststanzende Ausführung zu verwenden. Die günstigste Form für das freie Stirnende des Nietabschnitts geht aus dem europäischen Patent 1430229 hervor.

An dieser Stelle soll zum Ausdruck gebracht werden, dass die gezeigte Form des Elements keinesfalls einschränkend zu verstehen ist. Üblicherweise soll aber der Kopfteil 2 eine Querabmessung aufweisen, die größer ist als eine Querabmessung des Schaftteils 3. Infolgedessen könnte der Kopfteil 2 beispielsweise eine rechteckige Form haben, die an zwei entgegengesetzten Seiten über den Schaftteil 3 hinausragt. Auch andere Formen des Kopfteils sind durchaus möglich, wie z.B. einen polygonalen oder einen welligen Außenumriss. Wichtig ist nur, dass in einer Querrichtung der Kopfteil größer ist als eine Querabmessung des Schaftteils 3. Auch der Schaftteil 3, der kreiszylindrisch ausgebildet ist, kann eine andere Form aufweisen, beispielsweise eine ovale oder polygonale Form. Ferner ist das Vorhandensein eines Nietabschnitts keinesfalls zwingend erforderlich, beispielsweise könnte der Schaftteil 3 für das Einsetzen in eine Platine gedacht werden, so dass er nur in ein entsprechendes Loch in einer Platine eingesetzt werden müsste, wobei der Schaftteil anschließend mit der Platine verlötet oder mittels Ultraschall verschweißt werden könnte.

Auch sind die beschriebenen Verdrehsicherungsmerkmale 7, 8 keinesfalls erforderlich, insbesondere dann nicht, wenn das Element in seiner Funktion keine Drehmomente übertragen muss.

Obwohl das Element 1 als Bolzenelement gezeigt ist, könnte es auch als ein hohles Element wie ein Mutterelement realisiert werden. In diesem Fall würde beispielsweise die zylindrische Passage 13 sich über die gesamte Länge des Elements erstrecken und könnte auch teilweise (oder gänzlich) mit einem Gewinde versehen werden.

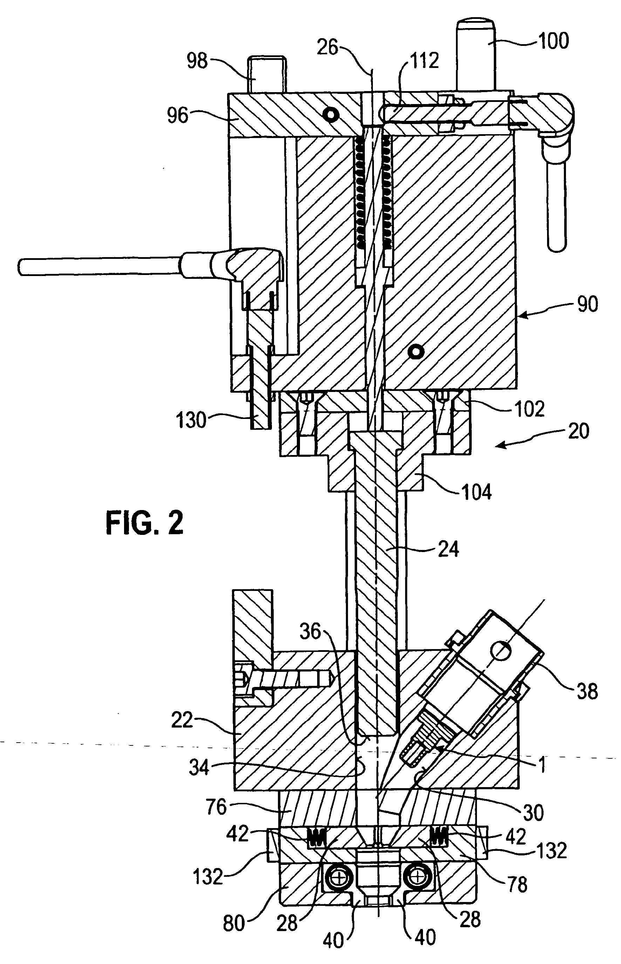

Es wird jetzt auf die weiteren Figuren 2 bis 7 verwiesen.

Wie insbesondere aus der Fig. 2 ersichtlich ist, wird eine Führungs- und Setzeinrichtung 20 für Elemente wie 1, insbesondere Fügeelemente vorgesehen, die unter anderem aus einem hohlen Führungsstück 22, einem innerhalb des Führungsstücks 22 axial verschiebbar angeordneten Stempel 24 und senkrecht zum Stempel verschiebbar geführten und in Richtung auf die Längsachse 26 des Stempels 24 bzw. des Führungsstückes 22 zu vorgespannten Haltegliedern 28 besteht.

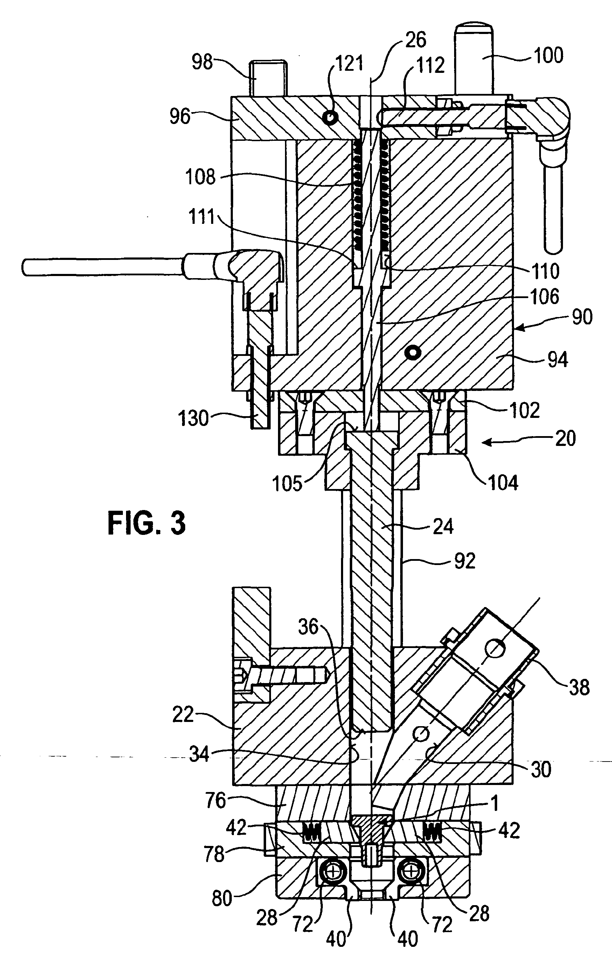

In der Darstellung gemäß Fig 2 befindet sich ein Element 1 in einem Führungskanal 30 des Führungsstücks 22 und fällt weiter unter Einwirkung der Schwerkraft oder eines Luftstoßes aus der Position der Fig. 2 durch den Führungskanal 30 und durch einen Teil des Stempelkanals 34 hindurch in die in Fig. 3 gezeigte Stellung. D.h. in der gezeigten zurückgezogenen Beladeposition des Stempels 24 ist jeweils ein Element 1 zwischen den Haltegliedern 28 und dem freien Stirnende 36 des Stempels 24 einführbar.

Das Bezugszeichen 38 deutet auf einen Anschluss für einen Förderschlauch, der eine Vielzahl von Elementen liefern kann, die beispielsweise von einem Förder- und Sortiergerät (nicht gezeigt) vereinzelt an die Führungs- und Setzeinrichtung geliefert werden, wie beispielsweise in der EP-A- 864396 beschrieben ist.

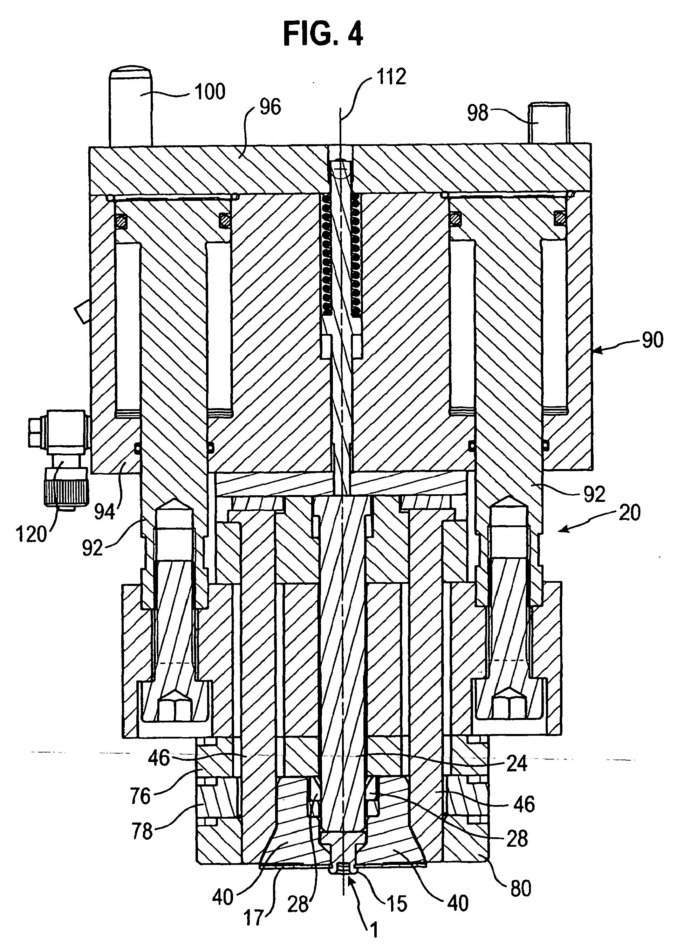

Die Halteglieder 28 sind aufgrund der axialen Vorschubbewegung des Stempels 24 aufsteuerbar und das jeweilige Element 1 ist dann in axialer Richtung an den Haltegliedern 28 vorbei bewegbar, und zwar so, dass es unter dem Druck des Stempels von weiteren, den erst genannten Haltegliedern 28 folgenden Haltegliedern 40 aufgenommen wird, wie in der Fig. 4 gezeigt.

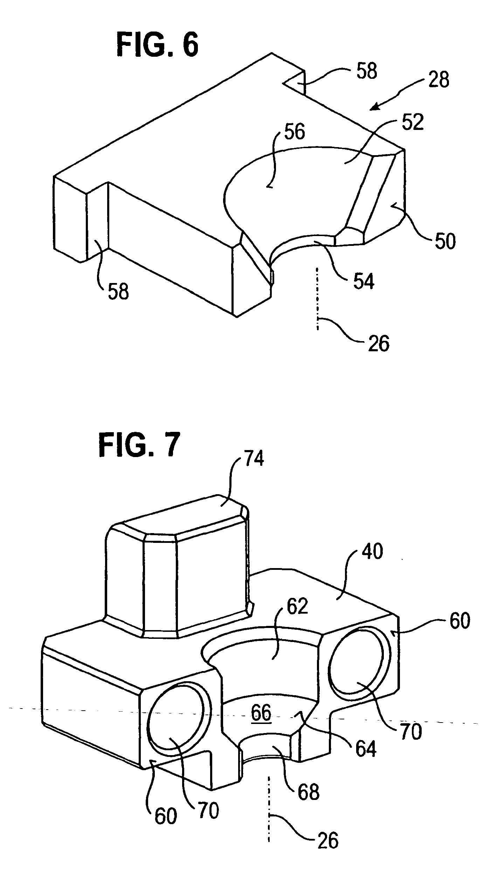

Die genaue Form der ersten Halteglieder 28, von denen in diesem Beispiel zwei vorhanden sind und welche durch Feder 42 aufeinander zu vorgespannt sind, geht am besten aus der perspektivischer Darstellung der Fig. 6 hervor. Die genaue Form der weiteren Halteglieder 40, von denen in diesem Beispiel ebenfalls zwei vorhanden sind und welche durch die Feder 44 von einander weg vorgespannt sind, geht am besten aus der perspektivischer Darstellung der Fig. 7 hervor.

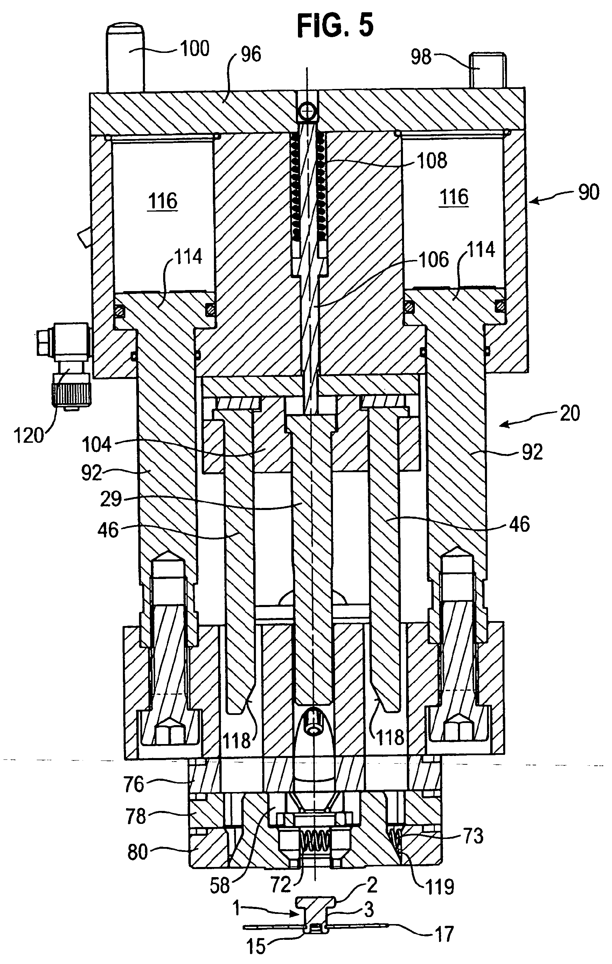

Die weiteren Halteglieder 40 halten das Element 1 kippfrei während eines Setzhubes. Wie ebenfalls aus der Fig. 4 ersichtlich sind in diesem Beispiel zwei Verriegelungselemente 46 vorgesehen, die während des sogenannten Setzhubes ein Aufsteuern der weiteren Halteglieder 40 verhindern, jedoch nach dem Vollenden des Setzhubes das Aufsteuern der weiteren Halteglieder 40 zur Freigabe des Elements 1 zulassen, wie in Fig. 5 gezeigt.

Die Auslegung der Führungs- und Setzeinrichtung wird nachfolgend näher erläutert. Die ersten Halteglieder 28 weisen gemäß Fig. 6 an ihren einander zugewandten Stirnseiten 50 eine Formgebung auf, die einander in Richtung der Längsachse 26 folgend wenigstens einen ersten Abschnitt 52, der mindestens einen dem Schaftteil zugewandten Bereich des Kopfteils 2 (siehe Fig. 3) aufnimmt und der sich auf einen zweiten in Fig. 6 unterhalb des ersten Abschnitts 52 gezeigten hier zylindrischen Abschnitt 54 hin verjüngt. Der Abschnitt 54 weist einen Durchmesser auf, der dem des Schaftteils entspricht. Die Abschnitte 52 der beiden Halteglieder 28 haben in diesem Beispiel Schrägflächen wie 56, die ausgelegt sind, um das Aufsteuern der ersten Halteglieder 28, d.h. eine Bewegung der Halteglieder 28 voneinander weg entgegen der Vorspannkraft der Feder 42, durch den Kopfteil 2 des Elements 1 unter der Einwirkung des Stempels herbeizuführen. Die Bezugszeichen 58 deuten auf Anschläge hin, die - wie am besten aus der Fig. 5 ersichtlich - dafür sorgen, dass die durch die Stirnseiten 50 der Halteglieder 28 gebildete Trennebene in geschlossenem Zustand der Halteglieder 28 stets mittig angeordnet sind, d.h. sie liegen symmetrisch zu der Längsachse 26. Hierdurch wird auch sichergestellt, dass das Element 1 koaxial zur Längsachse angeordnet ist, d.h. dass die mittlere Längsachse 19 des Elements mit der Längsachse 26 fluchtet. Es soll zum Ausdruck gebracht werden, dass die konkrete Formgebung der Halteglieder 28 auch anders gewählt werden kann und üblicherweise wird, je nach konkreter Formgebung des Elements 1. Wichtig ist, dass das Element im Bereich des Kopfteils und des Schaftteils von den Haltegliedern 28 gegen Kippen gesichert ist, wofür nur gewisse Berührungspunkte erforderlich sind und gewisse Schrägen aufweist, die ein Aufsteuern der Halteglieder mittels des Kopfteils des Elements oder durch das freie Ende des Stempels bei Bewegung des Stempels in Richtung der Längsachse 26 ermöglicht.

Die weiteren Halteglieder 40 weisen an ihren einander zugewandten Stirnseiten 60 eine Formgebung auf, die einander in Richtung der Längsachse folgend wenigstens einen ersten Abschnitt 62 aufweisen, der mindestens einen dem Schaftteil 3 zugewandten Bereich des Kopfteils 2 aufnimmt, einen zweiten sich vom ersten Abschnitt 62 auf die Querabmessung des Schaftteils verjüngenden Abschnitt 64, dessen Schrägflächen 66 ausgelegt sind, um das Aufsteuern der weiteren Halteglieder 40 durch den Kopfteil 2 bei oder nach dem Zurückziehen des Verriegelungselemente 46 zu ermöglichen und das jeweilige Element 1 hierdurch freizugeben, und einen dritten Abschnitt 68, der an den Schaftteil 3 angreift, um das Element 1 während des Setzvorgangs bzw. Setzhubes, ggf. in Zusammenarbeit mit dem ersten Abschnitt 62 kippfrei und koaxial zur Längsachse 26 zu halten. Aus Fig. 7 sind ferner zwei Sackbohrungen 70 zu sehen, die die Schraubendruckfeder 72 aufnehmen, die die Halteglieder nach außen vorspannen. Gegebenenfalls können weitere Schraubendruckfedern wie 73 in Fig. 5 gezeigt außerhalb der Bewegungsebene der Verriegelungselemente 46 vorgesehen werden, die die weiteren Halteglieder entgegengesetzt zu den Federn 72 aufeinander zu drücken. Hierdurch können die weiteren Halteglieder 40 stabilisiert werden.

Auch hier kann die konkrete Formgebung der weiteren Halteglieder 40 anders gewählt werden kann und üblicherweise wird, je nach konkreter Formgebung des Elements 1. Wichtig ist auch hier, dass das Element 1 mindestens im Bereich des Schaftteils 3 von den weiteren Haltegliedern 40 gegen Kippen gesichert ist, wofür nur gewisse Berührungspunkte an den weiteren Haltegliedern 40 erforderlich sind und dass diese gewisse Schrägen aufweisen, die ein Aufsteuern der weiteren Halteglieder 40 mittels des Kopfteils 2 des Elements 1 nach Freigabe durch die Verriegelungselemente 46 ermöglicht.

Es soll auch darauf hingewiesen werden, dass die weiteren Halteglieder 40 in diesem Beispiel auch nach oben ragenden Lappen 74 aufweisen, die jeweils in Eingriff mit einem der Verriegelungselemente 46 gelangen und für einen einwandfreien Ablauf der Verriegelung der weiteren Halteglieder 40 vor bzw. während des Setzhubes sorgen.

Ferner ist beispielsweise aus der Fig.3 ersichtlich, dass das untere Ende des hohlen Führungsstücks durch drei Platten 76, 78 und 80 gebildet ist, die durch sich in axialer Richtung erstreckende Schrauben aneinander befestigt sind, die in den Schnittzeichnung nicht ersichtlich sind, jedoch in etwa in Eckbereichen der in etwa rechteckigen Platten vorgesehen sind. Die obere Platte 76 in Fig. 3 bildet einen Teil des Stempelkanals 34 für die Führung des Stempels und den Kopfteil des Elements. Ferner bildet sie eine Abschlussfläche für die untere Platte 78, in der eine Ausnehmung für die verschiebbar angeordneten ersten Halteglieder 28 und - wie aus Fig. 4 ersichtlich - für die Arbeitsenden der Verriegelungselemente und die Lappen 74 vorgesehen ist. Die dritte Platte 80 hat eine Ausnehmung, die die weiteren Halteglieder 40 verschiebbar aufnimmt wie auch Endbereiche der Verriegelungselemente 46. Die extrem unteren Flächen der weiteren Halteglieder 40 in den Fig. 2 bis 5 ragen geringfügig über die untere Seite der Platte 80 hinaus, was Vorteile bei der Annietung des Elements an das Blechteil in Fig. 5 bringt. Das Führungsstück 22 kann gegebenenfalls von einem gefederten Niederhalter (nicht gezeigt) umgeben werden, der das Blechteil 17 an ein unteres Werkzeug der Presse oder an eine dort vorgesehene Matrize (nicht gezeigt) drückt.

Die erfindungsgemäße Führungs- und Setzeinrichtung 20 besteht ferner, wie aus den Fig. 2 bis 5 ersichtlich, aus einem Befestigungsteil 90, der zur Anbringung an ein Werkzeug einer Presse sowie aus dem hohlen Führungsstück 22 besteht. Das Führungsstück 22 ist über vom Befestigungsteil 90 getragenen, von diesem weg vorspannbaren und in Richtung auf diesen zu bewegbaren Führungen 92 am Befestigungsteil 90 beweglich angebracht, wie etwas später näher erläutert wird.

Bei Anwendung der erfindungsgemäßen Führungs- und Setzeinrichtung in einer Presse oder anderweitigen Positionier- oder Anbringungseinrichtungen wird der Befestigungsteil 90, hier über eine am Gehäuse 94 angeschraubte Abdeckplatte 96 mittels Schrauben wie 98 und Dübel wie 100 am oberen Werkzeug der Presse oder an einer Zwischenplatte der Presse oder in einer umgekehrten Anordnung an einem unteren Werkzeug einer Presse angebracht, während das Blechteil oder Bauteil, an dem das Element angebracht werden soll, von der Zwischenplatte der Presse oder vom unteren Werkzeug der Presse oder in einer umgekehrten Anordnung von der Zwischenplatte der Presse oder vom oberen Werkzeug der Presse getragen wird. Sollte eine andere Einrichtung wie ein C-Gestell oder Roboter die Führungs- und Setzeinrichtung tragen, so wird der Befestigungsteil an entsprechenden Werkzeugen der jeweiligen Einrichtung angebracht.

Der Stempel 24 ist für eine begrenzte Bewegung in Richtung der Längsachse 26 gegenüber dem Befestigungsteil 90 an diesem mittels zweier an einander und unten am Befestigungsteil 90 verschraubten Platten 102, 104 angebracht. Die obere Stirnseite 105 des Stempels 24 wird von einem gefederten Stift 106 (Feder 108) berührt, der in einer Bohrung 110 des Befestigungsteils 90 angeordnet ist und gegen einen Kragen 111 des Stiftes 106 drückt. Wenn das untere Stirnende 36 des Stempels 24 den Kopfteil 2 eines Elements berührt, so wird der Stift 106 nach oben bewegt und löst ein Signal an einem Sensor 112 aus, das bestätigt, das ein Element 1 vorhanden ist und den weiteren Betrieb der Presse zulässt.

Die Führungen 92 sind an jeweiligen Kolben 114 befestigt, die in jeweiligen Zylindern 116 des Befestigungsteils gleiten können. Die Kolben 114 bzw. die Zylinderräume 116 auf der dem hohlen Führungsstück 22 abgewandten Seite werden normalerweise mit einem Druckfluid wie Druckluft beaufschlagt, um das hohle Führungsstück vom Befestigungsteil weg vorzuspannen, so dass bei geöffneter Presse die Führungs- und Setzeinrichtung die Stellung gemäß Fig. 2 annimmt. Der Fluiddruck wird über die Anschlussbohrung 118 geliefert.

Die Kolben 114 bzw. die Zylinderräume auf der dem hohlen Führungssteil zugewandten Seite der Kolben 114 können mit einem Steuerdruck über den Anschluss 120 und nicht gezeigte Bohrungen im Befestigungsteil 90 beaufschlagt werden, um einen sogenannten Kontrollhub des Stempels am Anfang jedes Pressenzyklus durchzuführen. Hierdurch wird der Führungsstück nach oben in Richtung auf das Befestigungsteil 90 zu bewegt, wodurch der Stempel 29 sich zwangsläufig in Richtung auf das Element 1 zu bewegt und nach Berührung mit dem Element 1 nach oben in Bezug auf das Befestigungsteil 90 bis zum Anschlag seiner Stirnseite 105 an der Unterseite der Platte 102, wodurch der Kontrollhub zu Ende ist, der Sensor 112 löst das entsprechende Signal aus und der Steuerdruck wird abgeschaltet. Jetzt bewegt sich das Führungsstück 22 vom Befestigungsteil 90 aufgrund des Drucks oberhalb der Kolben 114 wieder weg.

Im Betrieb der Presse fängt diese nun an zu schließen bis die untere Seite der weiteren Halteglieder 40 das Blechteil berühren. Die weitere Schließbewegung der Presse führt nun dazu, dass sich das Führungsstück 22 in Richtung auf das Befestigungsteil 90 zu bewegt, und der Stempel 24 gerät jetzt in Berührung mit dem Element 1 und drückt es aus den Haltegliedern 28, die gleichzeitig aufgesteuert, d.h. auseinander bewegt werden, und in die Aufnahme, die durch die Abschnitte 62, 64, 68 der weiteren Halteglieder 40 gebildet wird. Diese weitere Bewegung wird begleitet von einer vorherigen Bewegung der weiteren Halteglieder 40 aufeinander zu, was durch die Schrägflächen 118 der Verriegelungselemente 46 bewirkt wird. Die Verriegelungselemente 46 verkeilen sich dann zwischen den Außenseiten der weiteren Halteglieder 40 und den entsprechenden Seiten der Ausnehmung der Platte 80 und verhindern, dass die weiteren Halteglieder 40 auseinander gehen und das Element freigeben. Zu diesem Zweck weisen die Schieber 40 auf ihren den genannten Schrägen 118 gegenüberliegenden Seiten eine jeweilige Abstützfläche 119 auf, die in der Verriegelungsstellung an einer feststehenden Fläche des hohlen Führungsstücks in dieser Ausführung der Platte 80 anliegt.

Durch weiteres Schließen der Presse drückt das freie Ende 36 des Stempels 24, der von oben auf Block mit dem Befestigungsteil 90 steht, bis der Nietabschnitt 5 des Elements 1 zu dem Nietbördel 15 umgebördelt ist, was in an sich bekannter Weise mittels einer geeigneten Matrize im Werkzeug der Pressen unterhalb des Blechteils 17 erfolgt.

Die Presse ist nunmehr vollständig geschlossen. Durch Öffnen der Presse bleibt das Führungsstück 22 zunächst noch in Berührung mit dem Blechteil unter dem Druck in den Zylinderräumen 116. Die Verriegelungselemente 46 ziehen sich aber mit dem Stempel 24 und mit dem Befestigungsteil 90 von den weiteren Haltegliedern bzw. vom Element zurück, wodurch die Federn 72 versuchen, die weiteren Halteglieder 40 zu öffnen, d.h. auseinander zu bewegen. Dies tritt spätestens dann ein, wenn der maximale Abstand zwischen dem Führungsstück 22 und dem Befestigungsteil erreicht ist, d.h. dann, wenn die Kolben 114 an das untere Ende der Zylinderräume 116 gelangen, wodurch das weitere Öffnen der Presse die weiteren Halteglieder 40 zwingt, aufgrund der Kopfform des Kopfteils 2 des Elements und die Schrägflächen 66 des Abschnitts 64, sich auseinander zu bewegen und das Element 1, das am Blechteil 17 hängen bleibt, freizugeben. Dies kann beispielsweise durch einen Niederhalter oder eine andere Einrichtung begünstigt bzw. bewerkstelligt werden, der bzw. die das Blechteil nach unten drückt oder hält. Falls ein Niederhalter vorgesehen ist, wird dieser anschließend durch das weitere Öffnen der Presse soweit angehoben, dass das Blechteil mit angebrachtem Element aus der Presse entnommen werden kann.

Das Verfahren zum Abringen eines Elements 1 an ein Blechteil 17 mittels einer Führungs- und Setzeinrichtung 20 läuft daher folgendermaßen ab:
a) die jeweils einen Kopfteil 2 größerer Querabmessung und einen Schaftteil 3 kleinerer Querabmessung aufweisenden Elemente 1, insbesondere Fügeelemente, werden vereinzelt in das hohle Führungsstück 22 eingeführt und von den ersten aufeinander zu vorgespannten Haltegliedern 28 im Bereich des Kopfteils 2 mit ihrem Schaftteil 3 voran aufgenommen,
b) anschließend drückt der innerhalb des Führungsstücks 22 axial verschiebbar angeordnete Stempel 24 des Elements 1 durch die ersten Halteglieder 28 hindurch, mit einer hierdurch bewirkten Aufsteuerbewegung der ersten Halteglieder 28 senkrecht zur Längsachse 26 des Stempels 24,
c) das jeweilige Element 1 wird dann in einer von weiteren Haltegliedern 40 gebildeten Aufnahme aufgenommen, die das Element 1 während des Setzhubes halten,
d) Verriegelungselemente 46 werden verwendet, um während des Setzhubes ein Aufsteuern der weiteren Halteglieder 40 zu verhindern und
e) nach dem Vollenden des Setzvorgangs werden die Verriegelungselemente 46 gelöst, um das Aufsteuern der weiteren Halteglieder 40 zur Freigabe des Elements 1 zuzulassen.

Das Bezugszeichen 130 deutet auf einen weiteren Sensor, der das Ende des Setzhubes zu Kontrollzwecken ermittelt und kann der Steuerung des Drucks in den Zylinderräumen 116 dienen. Die Bezugszeichen 132 deuten auf Federhalter, die an den entsprechenden Seiten der Platte 78 angeschraubt werden, um die Feder 42 einzufahren bzw. sie austauschen zu können.

Es soll darauf hingewiesen werden, dass hier verwendete Positionsbezeichnungen wie oberhalb, unterhalb usw. lediglich in Bezug auf die Zeichnungen zu verstehen und keinesfalls beschränkend auszulegen sind.

## Patentansprüche

1. Führungs- und Setzeinrichtung (20) für Elemente (1), insbesondere Fügeelemente, bestehend aus einem hohlen Führungsstück (22), einem innerhalb des Führungsstücks (22) axial verschiebbar angeordneten Stempel (24) und senkrecht zum Stempel verschiebbar geführten und in Richtung auf die Längsachse (26) des Stempels (24) bzw. des Führungsstückes (22) zu vorgespannten Haltegliedern (28), wobei in einer zurückgezogenen Beladeposition des Stempels jeweils ein Element zwischen den Haltegliedern (28) und dem freien Stirnende (36) des Stempels (24) einführbar ist, wobei
die Halteglieder (28) aufgrund der axialen Vorschubbewegung des Stempels (24) aufsteuerbar sind und das jeweilige Element (1) in axialer Richtung an den Haltegliedern (28) vorbei bewegbar ist, wobei weitere den erst genannten Haltegliedern folgende Halteglieder (40) vorgesehen sind, die das Element (1) während eines Setzhubes halten, **dadurch gekennzeichnet, dass** Verriegelungselemente (46) vorgesehen sind, die während des Setzhubes ein Aufsteuern der weiteren Halteglieder (40) verhindern, jedoch nach dem Vollenden des Setzhubes das Aufsteuern der weiteren Halteglieder (40) zur Freigabe des Elements (1) zulassen.

2. Führungs- und Setzeinrichtung (20) nach Anspruch 1,
**dadurch gekennzeichnet, dass**
sie ausgelegt ist, um Elemente (1) zu führen und zu setzen, die jeweils einen Kopfteil (2) größerer Querabmessung und einen Schaftteil (3) kleinerer Querabmessung sowie vorzugsweise einen mit dem Schaftteil (3) eine Schulter (4) bildenden Nietabschnitt (5) aufweisen, die eine Blechanlagefläche (6) bildet, dass die ersten Halteglieder (28) an ihren einander zugewandten Stirnseiten (50) eine Formgebung aufweisen, die einander in Richtung der Längsachse folgend wenigstens einen ersten Abschnitt (52) ausweisen, der mindestens einen dem Schaftteil zugewandten Bereich des Kopfteils (2) aufnimmt und sich zu einem zweiten Abschnitt (5) verjüngt, der an die Querabmessung des Schaftteils (3) angepasst ist, wobei die Schrägflächen (56) des ersten Abschnitts ausgelegt sind, um das Aufsteuern der ersten Halteglieder (28) durch den Kopfteil unter der Einwirkung des Stempels herbeizuführen.

3. Führungs- und Setzeinrichtung (20) nach Anspruch 2,
**dadurch gekennzeichnet, dass**
die weiteren Halteglieder (40) an ihren einander zugewandten Stimseiten (60) eine Formgebung aufweisen, die einander in Richtung der Längsachse (26) folgend wenigstens einen ersten Abschnitt (62) aufweisen, der mindestens einen dem Schaftteil (3) zugewandten Bereich des Kopfteils (2) aufnimmt, einen zweiten sich vom ersten Abschnitt (62) auf die Querabmessung des Schaftteils verjüngenden Abschnitt (64), dessen Schrägflächen (66) ausgelegt sind, um das Aufsteuern der weiteren Halteglieder (40) durch den Kopfteil (2) bei oder nach dem Zurückziehen der Verriegelungselemente (46) zu ermöglichen und das jeweilige Element (1) hierdurch freizugeben, und einen dritten Abschnitt (68), der an den Schaftteil angreift, um das Element während des Setzvorgangs ggf. in Zusammenarbeit mit dem ersten Abschnitt (62) kippfrei zu halten.

4. Führungs- und Setzeinrichtung (20) nach zumindest einem der vorstehenden Ansprüche,
**dadurch gekennzeichnet, dass**
die erstgenannten Halteglieder (28) durch zwei einander gegenüberliegende Halteglieder gebildet sind, die mittels Feder (42) aufeinander zu vorgespannt sind.

5. Führungs- und Setzeinrichtung (20) nach zumindest einem der vorstehenden Ansprüche,
**dadurch gekennzeichnet, dass**
die weiteren Halteglieder (40) durch zwei einander gegenüberliegende Halteglieder gebildet sind, die mittels Feder (72) voneinander weg vorgespannt sind.

6. Führungs- und Setzeinrichtung (20) nach zumindest einem der vorstehenden Ansprüche,
**dadurch gekennzeichnet, dass**
sie aus einem Befestigungsteil (90), der zur Anbringung an ein Werkzeug einer Presse ausgelegt ist sowie aus dem hohlen Führungsstück (22) besteht, das über vom Befestigungsteil (90) getragenen, von diesem weg vorspannbaren und in Richtung auf diesen zu bewegbaren Führungen (92) am Befestigungsteil (90) beweglich angebracht ist, und dass der Stempel (24) am Befestigungsteil (90) angebracht ist.

7. Führungs- und Setzeinrichtung (20) nach zumindest einem der vorstehenden Ansprüche,
**dadurch gekennzeichnet, dass**
der Stempel (24) für eine begrenzte Bewegung in Richtung der Längsachse gegenüber dem Befestigungsteil (90) an diesem angebracht ist, wobei die Amplitude der vorgesehenen Bewegung des Führungsstücks (22) gegenüber dem Befestigungsteil (90) größer ist als die vorgesehene begrenzte Bewegung des Stempels (24) gegenüber dem Befestigungsteil (90), und dass eine Einrichtung (112) vorgesehen ist, um zu ermitteln, ob der Stempel sich in einer vorgespannten Stellung oder einer zurückgedrängten Stellung befindet.

8. Führungs- und Setzeinrichtung (20) nach Anspruch 6 oder 7,
**dadurch gekennzeichnet, dass**
die Führungen (92) an jeweiligen Kolben (114) befestigt sind, die in jeweiligen Zylindern (116) des Befestigungsteils (90) gleiten und dass die Kolben (114) bzw. die Zylinderräume (116) auf der dem hohlen Führungsstück (22) abgewandten Seite durch Fluiddruck beaufschlagbar sind, um das hohle Führungsstück (22) vom Befestigungsteil (90) weg vorzuspannen.

9. Führungs- und Setzeinrichtung (20) nach Anspruch 8,
**dadurch gekennzeichnet, dass**
die Kolben (114) bzw. die Zylinderräume auf der dem hohlen Führungsstück (22) zugewandten Seite mit einem Steuerdruck beaufschlagbar sind.

10. Führungs- und Setzeinrichtung (20) nach zumindest einem der vorstehenden Ansprüche,
**dadurch gekennzeichnet, dass**
die Verriegelungselemente (46) durch Schieber ausgebildet sind.

11. Führungs- und Setzeinrichtung (20) nach Anspruch 10,
**dadurch gekennzeichnet, dass** die Schieber (46) sich parallel zur Längsachse erstrecken und an ihren den weiteren Haltegliedern jeweils zugewandten Enden eine jeweilige Schräge (118) aufweisen, die mit entsprechenden Flächen der weiteren Halteglieder (40) zusammenarbeiten, um diese aufeinander zu zu bewegen und in Eingriff mit dem jeweiligen Element (1) zu halten.

12. Führungs- und Setzeinrichtung (20) nach Anspruch 11,
**dadurch gekennzeichnet, dass**
die Schieber (46) auf ihren den genannten Schrägen (118) gegenüberliegenden Seiten eine jeweilige Abstützfläche aufweisen, die in der Verriegelungsstellung an einer feststehenden Fläche (119) des hohlen Führungsstücks anliegt.

13. Verfahren zum Abringen eines Elements an einen Blechteil mittels einer Führungs- und Setzeinrichtung (20), wobei
a) die jeweils einen Kopfteil (2) größerer Querabmessung und einen Schaftteil (3) kleinerer Querabmessung aufweisenden Elemente, insbesondere Fügeelemente, vereinzelt in ein hohles Führungsstück (22) eingeführt und von ersten aufeinander zu vorgespannten Haltegliedern (28) im Bereich des Kopfteils (2) mit ihrem Schaftteil (3) voran aufgenommen werden,
b) die Elemente (1) anschließend von einem innerhalb des Führungsstücks (22) axial verschiebbar angeordneten Stempel (24) durch die Halteglieder (28) hindurch während einer hierdurch bewirkten Aufsteuerbewegung der ersten Halteglieder (28) senkrecht zur Längsachse des Stempels gedrückt werden und
c) das jeweilige Element (1) dann in einer von weiteren Haltegliedern (40) gebildeten Aufnahme aufgenommen wird, die das Element (1) während des Setzhubes halten, **dadurch gekennzeichnet, dass**
d) Verriegelungselemente (46) verwendet werden, um während des Setzhubes ein Aufsteuern der weiteren Halteglieder (40) zu verhindern
e) nach dem Vollenden des Setzvorgangs die Verriegelungselemente (46) gelöst werden, um das Aufsteuern der weiteren Halteglieder (40) zur Freigabe des Elements (1) zuzulassen.

14. Verfahren nach Anspruch 13,
**dadurch gekennzeichnet, dass**
der Stempel (24) gegenüber einem feststehenden Teil (90) der Führungs- und Setzeinrichtung (20) begrenzt beweglich angeordnet wird und das Vorhandensein eines Elements (1) dadurch festgestellt wird, dass bei Heranfahren des Stempels (24) an das von den ersten Haltegliedern (28) gehaltene Element (1) die Berührung des Stempels (24) mit dem Element (1) zu einer begrenzten Ausweichbewegung des Stempels (24) gegenüber dem feststehenden Teil (90) führt, die detektiert wird.

15. Verfahren nach einem der Anspruche 13 oder 14,
**dadurch gekennzeichnet, dass**
die Führungs- und Setzeinrichtung (20) an einem Werkzeug einer Presse angebracht wird und dass die aufgeführten Schritte a) bis e) durch das Schließen und anschließende Öffnen der Presse ausgeführt bzw. bewerkstelligt werden.

## Claims

1. A guide and setting device (20) for elements (1), in particular fastener elements, comprising a hollow guide piece (22), a plunger (24) axially displaceably arranged within the guide piece (22) and holding members (28) which are displaceably guided perpendicular to the plunger and biased in the direction towards a longitudinal axis (26) of the plunger (24) and/or the guide piece (22) wherein, in a retracted loading position of the plunger, a respective element can be inserted between the holding members (28) and the free end (36) of the plunger (24),
wherein the holding members (28) can be opened as a result of the axial advance movement of the plunger (24) and the respective element (1) can be moved in the axial direction past the holding members (28), wherein further holding members (40) following the first named holding members are provided which hold the element (1) during a setting stroke,
**characterized in that**
latching elements (46) are provided which prevent opening of the further holding members (40) during the setting stroke but after the completion of the setting stroke allow the opening of the further holding members (40) to release the element (1).

2. A guide and setting device (20) in accordance with claim 1,
**characterized in that**
it is designed to guide and set elements (1) which each have a head part (2) with a larger transverse dimension and a shaft part (3) with a smaller transverse dimension, the elements also preferably having a rivet section (5) forming a shoulder with the shaft part (3), with the shoulder forming a sheet metal contact surface (6); **in that** the first holding members (28) have a shape at their confronting end faces (50) which have, following one another in the direction of the longitudinal axis, at least one first section (52) which receives at least one region of the head part (2) adjacent the shaft part and tapers to a second section (5) which is matched to the transverse dimension of the shaft part (3), with inclined surfaces (56) of the first section being designed in order to bring about the opening of the first holding members (28) by the head part under the action of the plunger.

3. A guide and setting device (20) in accordance with claim 2,
**characterized in that**
the further holding members (40) have a shape at their confronting end faces (60) which have, following one another in the direction of the longitudinal axis (26), at least one first section (62) which receives at least a region of the head part (2) adjacent to the shaft part (3), a second section (64) which tapers from the first section (62) to the transverse dimension of the shaft part with inclined surfaces (66) of the second section (64) being designed to enable the opening of the further holding members (40) by the head part (2) on or after the retraction of the latching elements (46) and hereby release the respective element (1) and a third section (68) which acts on the shaft part in order to hold the element free from tilting during the setting process, optionally in cooperation with the first section (62) of the further holding members (40).

4. A guide and setting device (20) in accordance with at least one of the preceding claims,
**characterized in that**
the first named holding members (28) are formed by two oppositely disposed holding members which are biased towards one another by means of springs (42).

5. A guide and setting device (20) in accordance with at least one of the preceding claims,
**characterized in that**
the further holding members (40) are formed by two oppositely disposed holding members which are biased away from one another by means of springs (72).

6. A guide and setting device (20) in accordance with at least one of the preceding claims,
**characterized in that**
it comprises an attachment part (90) which is designed for the attachment to a tool of a press and also of the hollow guide piece (22) which is movably attached to the attachment part (90) via guides (92) carried by the attachment part (90), means for biasing said hollow guide piece away from said attachment part and means permitting movement of said hollow guide piece in a direction towards said attachment part and **in that** the plunger (24) is attached to the attachment part (90).

7. A guide and setting device (20) in accordance with at least one of the preceding claims,
**characterized in that**
the plunger (24) is attached to the attachment part (90) for a limited movement in the direction of the longitudinal axis relative to the attachment part (90), with an amplitude of the movement of the guide piece (22) which is provided relative to the attachment part (90) being larger than a restricted movement of the plunger (24) relative to the attachment part (90) which is provided and **in that** a device (112) is provided in order to determine whether the plunger is located in a forwardly biased position or in an urged back position.

8. A guide and setting device (20) in accordance with claim 6 or claim 7,
**characterized in that**
the means for biasing the hollow guide piece away from said attachment part comprises the guides (92) and pistons (114) secured to said guides (92) and slideable in respective cylinder spaces (116) of the attachment part (90) and **in that** the pistons (114) and/or the cylinder spaces (116) can be acted on by fluid pressure at a side remote from the hollow guide piece (22) in order to bias the hollow guide piece (22) away from the attachment part (90).

9. A guide and setting device (20) in accordance with claim 8,
**characterized in that**
a control pressure can be supplied to the pistons (114) and/or the cylinder spaces at a side adjacent the hollow guide piece (22).

10. A guide and setting device (20) in accordance with at least one of the preceding claims,
**characterized in that**
the latching elements (46) are formed by sliders.

11. A guide and setting device (20) in accordance with claim 10,
**characterized in that**
the sliders (46) extend parallel to the longitudinal axis and have a respective ramp (118) at their ends respectively adjacent the further holding members which cooperate with corresponding surfaces of the further holding members (40) in order to move said further holding members towards one another and to keep them in engagement with the respective element (1).

12. A guide and setting device (20) in accordance with claim 11,
**characterized in that**
the sliders (46) have a respective support surface at their sides facing away from the named ramps (118) which contact a fixed surface (119) of the hollow guide piece in the latched position.

13. A method for the attachment of an element to a sheet metal part by means of a guide and setting device (20), wherein
a) the elements, in particular fastener elements, have a head part (2) with a larger transverse dimension and a shaft part (3) with a smaller transverse dimension, are individually introduced into a hollow guide piece (22) and are received by first holding members (28) biased towards one another in the region of the head part (2) with the shaft parts (3) advancing during the reception of the elements;
b) the element (1) is subsequently moved through the holding members (28) by a plunger (24) axially displaceably arranged within the guide piece (22) during an opening movement of the first holding members (28) perpendicular to a longitudinal axis of the plunger which is brought about by the plunger; and
c) the respective element (1) is then received in a mount formed by further holding members (40) which hold the element (1) during the setting stroke;
**characterized in that**
d) latching elements (46) are used in order to prevent opening of the further holding members (40) during the setting stroke; and
e) after the completion of the setting process the latching elements (46) are released in order to permit the opening of the further holding members (40) for the release of the element (1).

14. A method in accordance with claim 13,
**characterized in that**
the plunger (24) is restrictedly moveably arranged relative to a fixed part (90) of the guide and setting device (20) and the presence of an element (1) is determined **in that** on the approach of the plunger (24) to the element (1) held by the first holding members (28) contact of the plunger (24) with the element (1) lead to a restricted deviation movement of the plunger (24) relative to a fixed part (90) which is detected.

15. A method in accordance with claim 13 or claim 14,
**characterized in that**
the guide and setting device (20) is attached to a tool of a press and **in that** the recited steps a) to e) are brought about by the closing and subsequent opening of the press.

## Revendications

1. Dispositif de guidage et de mise en place (20) pour des éléments (1), en particulier des éléments d'assemblage, constitué d'une pièce de guidage creuse (22), d'un poinçon (24) agencé avec possibilité de translation axiale à l'intérieur de la pièce de guidage (22), et d'éléments de retenue (28) guidés avec possibilité de translation perpendiculairement au poinçon et précontraints en direction de l'axe longitudinal (26) du poinçon (24) ou de la pièce de guidage (22), dans lequel, dans une position de chargement rétractée du poinçon, un élément respectif est susceptible d'être introduit entre les éléments de retenue (28) et l'extrémité frontale libre (36) du poinçon (24), dans lequel les éléments de retenue (28) peuvent être commandés en ouverture en raison du mouvement d'avance axiale du poinçon (24), l'élément respectif (1) est déplaçable en direction axiale en passant devant les éléments de retenue (28), et dans lequel il est prévu d'autres éléments de retenue (40) qui suivent les éléments de retenue mentionnés en premier, qui retiennent l'élément (1) pendant une course de mise en place,
**caractérisé en ce qu'**il est prévu des éléments de verrouillage (46) qui, pendant la course de mise en place, empêchent une commande en ouverture des autres éléments de retenue (40), mais qui, après terminaison de la course de mise en place, permettent la commande en ouverture des autres éléments de retenue (40) pour libérer l'élément (1).

2. Dispositif de guidage et de mise en place (20) selon la revendication 1,
**caractérisé en ce qu'**il est conçu pour guider et pour mettre en place des éléments (1) qui comprennent respectivement une partie de tête (2) avec des dimensions transversales plus importantes, et une partie de tige (3) avec des dimensions transversales plus petites, ainsi que de préférence un tronçon de rivetage (5) qui forme un épaulement (4) avec la partie de tige (3) et qui forme une surface d'appui de tôle (6), **en ce que** les premiers éléments de retenue (28) présentent, au niveau de leurs faces frontales (50) tournées les unes vers les autres, une conformation qui présente, en se suivant les unes les autres en direction de l'axe longitudinal, au moins un premier tronçon (52), lequel reçoit au moins une zone, tournée vers la partie de tige, de la partie de tête (2) et se rétrécit vers un second tronçon (5) qui est ajusté à la dimension transversale de la partie de tige (3), et les surfaces obliques (56) du premier tronçon sont conçues pour provoquer la commande en ouverture des premiers éléments de retenue (28) au moyen de la partie de tête sous l'action du poinçon.

3. Dispositif de guidage et de mise en place (20) selon la revendication 2,
**caractérisé en ce que** les autres éléments de retenue (40) présentent, au niveau de leur faces frontales (60) tournées les unes vers les autres, une conformation qui présente, en se suivant les unes les autres en direction de l'axe longitudinal (26), au moins un premier tronçon (62), lequel reçoit au moins une zone de la partie de tête (2) tournée vers la partie de tige (3), un second tronçon (64), qui se rétrécit depuis le premier tronçon (62) jusqu'à la dimension transversale de la partie de tige et dont les surfaces obliques (66) sont conçues pour permettre la commande en ouverture des autres éléments de retenue (40) par la partie de tête (2) lors de la rétraction des éléments de verrouillage (46) ou après cette rétraction, et libérer de ce fait l'élément respectif (1), et un troisième tronçon (68) qui attaque la partie de tige pour maintenir l'élément sans basculement pendant le processus de mise en place, le cas échéant en coopération avec le premier tronçon (62).

4. Dispositif de guidage et de mise en place (20) selon l'une au moins des revendications précédentes,
**caractérisé en ce que** les premiers éléments de retenue (28) précités sont formés par deux éléments de retenue mutuellement opposés, qui sont précontraints l'un vers l'autre au moyen de ressorts (42).

5. Dispositif de guidage et de mise en place (20) selon l'une au moins des revendications précédentes,
**caractérisé en ce que** les autres éléments de retenue (40) sont formés par deux éléments de retenue mutuellement opposés, qui sont précontraints en éloignement l'un de l'autre au moyen de ressorts (72).

6. Dispositif de guidage et de mise en place (20) selon l'une au moins des revendications précédentes,
**caractérisé en ce qu'**il est composé d'une partie de fixation (90) qui est conçue pour être montée sur un outil d'une presse, ainsi que d'une partie de guidage creuse (22), laquelle est montée de manière mobile sur la partie de fixation (90) via des guidages (92) portés par la partie de fixation (90), susceptibles d'être précontraints en éloignement de celle-ci, et de se déplacer en direction de celle-ci, et **en ce que** le poinçon (24) est monté sur la partie de fixation (90).

7. Dispositif de guidage et de mise en place (20) selon l'une au moins des revendications précédentes,
**caractérisé en ce que** le poinçon (24) est monté sur la partie de fixation (90) pour un déplacement limité en direction de l'axe longitudinal par rapport à la pièce de fixation (90), l'amplitude du mouvement prévu de la pièce de guidage (22) par rapport à la partie de fixation (90) étant plus grande que le mouvement limité prévu du poinçon (24) par rapport à la partie de fixation (90), et **en ce qu'**il est prévu un moyen (112) pour déterminer si le poinçon se trouve dans une position précontrainte ou dans une position forcée en retour.

8. Dispositif de guidage et de mise en place (20) selon la revendication 6 ou 7,
**caractérisé en ce que** les guidages (92) sont fixés sur des pistons respectifs (114), lesquels coulissent dans des cylindres respectifs (116) de la partie de fixation (90), et **en ce que** les pistons (114) ou respectivement les chambres cylindriques (116) sont susceptibles d'être sollicité(e)s sous la pression d'un fluide sur le côté détourné de la pièce de guidage creuse (22), afin de précontraindre la pièce de guidage creuse (22) en éloignement de la partie de fixation (90).

9. Dispositif de guidage et de mise en place (20) selon la revendication 8,
**caractérisé en ce que** les pistons (114) ou respectivement les chambres cylindriques sont susceptibles d'être sollicité(e)s avec une pression de commande sur le côté tourné vers la partie de guidage creuse (22).

10. Dispositif de guidage et de mise en place (20) selon l'une au moins des revendications précédentes,
**caractérisé en ce que** les éléments de verrouillage (46) sont formés par des coulisseaux.

11. Dispositif de guidage et de mise en place (20) selon la revendication 10,
**caractérisé en ce que** les coulisseaux (46) s'étendent parallèlement à l'axe longitudinal et comportent, à leurs extrémités tournées respectivement vers les autres éléments de retenue, une pente respective (118), lesquelles coopèrent avec des surfaces correspondantes des autres éléments de retenue (40), afin de déplacer ceux-ci les uns vers les autres et de les maintenir en engagement avec l'élément respectif (1).

12. Dispositif de guidage et de mise en place (20) selon la revendication 11,
**caractérisé en ce que** les coulisseaux (46) comportent, sur leurs côtés opposés aux pentes précitées (118), une surface de soutien respective, qui est appliquée, dans la position de verrouillage, contre une surface stationnaire (119) de la pièce de guidage creuse.

13. Procédé pour appliquer un élément sur une partie en tôle au moyen d'un dispositif de guidage et de mise en place (20), dans lequel
a) les éléments, qui présentent chacun une partie de tête (2) de plus grande dimension transversale et une partie de tige (3) de plus petite dimension transversale, en particulier des éléments d'assemblage, sont introduits individuellement dans une pièce de guidage creuse (22) et sont reçus, par des premiers éléments de retenue (28) précontraints les uns contre les autres, dans la zone de la partie de tête (2) avec leurs parties de tige (3) en avant,
b) les éléments (1) sont ensuite pressés, par un poinçon (24) agencé avec possibilité de translation axiale à l'intérieur de la pièce de guidage (22), en traversant les éléments de retenue (28) pendant un mouvement de commande en ouverture provoqué de ce fait des premiers éléments de retenue (28), perpendiculairement à l'axe longitudinal du poinçon, et
c) l'élément respectif (1) est alors reçu dans un logement formé par d'autres éléments de retenue (40), qui retiennent l'élément (1) pendant la course de mise en place,
**caractérisé en ce que**
d) on utilise des éléments de verrouillage (46) afin d'empêcher, pendant la course de mise en place, une commande des autres éléments de retenue (40) en ouverture, et
c) après terminaison de l'opération de mise en place, les éléments de verrouillage (46) sont libérés, afin de permettre la commande des autres éléments de retenue (40) en ouverture pour libérer l'élément (1).

14. Procédé selon la revendication 13,
**caractérisé en ce que** le poinçon (24) est agencé de manière à se déplacer de façon limitée par rapport à une partie stationnaire (90) du dispositif de guidage et de mise en place (20), et **en ce qu'**on constate de ce fait la présence d'un élément (1), **en ce que** lors de l'approche du poinçon (24) vers l'élément (1) retenu par les premiers éléments de retenue (28), le contact du poinçon (24) avec l'élément (1) mène à un mouvement d'écartement limité du poinçon (24) par rapport à la partie stationnaire (90), mouvement qui est détecté.

15. Procédé selon l'une des revendications 13 ou 14,
**caractérisé en ce que** le dispositif de guidage et de mise en place (20) est monté sur un outil d'une presse, et **en ce que** les étapes a) à c) exécutées sont exécutées ou réalisées par la fermeture et l'ouverture successive de la presse.
